# EUROPÄISCHE PATENTANMELDUNG

(11) **EP 4 094 906 A1**
(43) Veröffentlichungstag der Anmeldung: **30.11.2022**
(21) Anmeldenummer: 21175970.9
(22) Anmeldetag: 26.05.2021
(51) Int. Cl.: B25J 15/04, B25J 9/16

(54) **GREIFANORDNUNG**

(71) Anmelder: AyTec Automation GmbH, 93098 Mintraching (DE)
(72) Erfinder: RUHLAND, Christian, 93161 Sinzing (DE); Geigenfeind, Andreas, 93098 Mintraching (DE)
(74) Vertreter: Glück Kritzenberger Patentanwälte PartGmbB

(57) **Zusammenfassung**

Die Erfindung betrifft eine Greifanordnung (10) für in einem Behälter (28) abgelegtes loses Stückgut (29), umfassend einen Roboter (12) mit wenigstens einem mit mehreren Freiheitsgraden beweglichen Roboterarm (14),
eine Steuerung (34) für den Roboterarm (14), wenigstens ein an dem Roboterarm (14) angeordnetes Kopplungselement (24) für Greifwerkzeuge (26a-26g),
eine mit der Steuerung (34) verbundene 3D-Scaneinrichtung,
eine im Zugriffsbereich des Roboterarms (14) angeordnete Wechselanordnung (30) mit Wechselplätzen (31a-31d) für mehrere unterschiedliche Greifwerkzeuge (26a-26g), alle Greifwerkzeuge (26a-26g) sind mit dem Roboterarm (14) mittels eines über die Steuerung (34) steuerbaren Kupplungssystems (25) verbindbar, welches seitens des Roboterarms (14) das Kopplungselement (24) umfasst. Die Steuerung (34) weist einen Werkzeugspeicherbereich (36) für Daten der unterschiedlichen Greifwerkzeuge (26a-26g) auf und hat eine werkzeugspezifische Recheneinheit (38), die ausgebildet ist, in Abhängigkeit von den Daten im Werkzeugspeicherbereich (36) und den Daten der 3D-Scaneinrichtung den Zugriffserfolg und/oder die Zugriffsgeschwindigkeit für wenigstens zwei der unterschiedlichen Greifwerkzeuge (26a-26g) zu berechnen. Entsprechend ist die Steuerung (34) ausgebildet, in Abhängigkeit von dem Rechenergebnis der Recheneinheit (38) einen Werkzeugwechsel durchzuführen oder mit dem Greifwerkzeug (26a-26g) zu greifen, das aktuell mit dem Kopplungselement (24) verbunden ist.

## Beschreibung

Die vorliegende Erfindung betrifft eine Greifanordnung für in wenigstens einem Behälter abgelegtes loses Stückgut, umfassend einen Roboter mit wenigstens einem mit mehreren Freiheitsgraden beweglichen Roboterarm, dessen Zugriffsbereich ausgebildet ist zur Aufnahme des Behälters, der vorzugsweise nach oben offen ist, so dass das Stückgut zugänglich ist.

Die Greifanordnung enthält weiterhin eine Steuerung für den Roboterarm, und wenigstens ein an dem Roboterarm angeordnetes Kopplungselement für unterschiedliche Greifwerkzeuge. Der Roboterarm kann dadurch entsprechend dem Stückgut mit unterschiedlichen Greifwerkzeugen versehen werden.

Die Greifanordnung umfasst zudem eine mit der Steuerung verbundene 3D-Scaneinrichtung, die ausgebildet ist, die offene Seite des Behälters abzuscannen. Derartige Systeme, die aktuell als "Bin Picking"-Systeme bezeichnet werden, sind in der Lage, die zufällige Orientierung der einzelnen Teile des Stückguts in dem Behälter zu identifizieren und das Greifwerkzeug derart an das Teil des Stückguts heranzufahren und zu greifen, dass die zufällig orientierten Stückgüter in dem Behälter von dem über den Roboterarm geführten Greifwerkzeug einzeln entnommen und zur weiteren Verarbeitung überführt werden können. Ein Problem kann dann bestehen, wenn die Orientierung der oben liegenden Stückgüter so ungünstig ist, dass ein Greifen der einzelnen Stückgüter durch das Greifwerkzeug am Roboterarm nicht oder nur sehr umständlich möglich ist.

Es ist daher Aufgabe der Erfindung, eine Greifanordnung der oben genannten Art zu schaffen, die ein problemloses Greifen von lose und zufällig angeordnetem Stückgut auch dann erlaubt, wenn die bisherigen Probleme bei dem Vereinzeln der Stückgüter auf Schwierigkeiten stoßen.

Diese Aufgabe wird gemäß der Erfindung durch eine Greifanordnung mit den Merkmalen des Anspruchs 1 und durch ein Verfahren mit den Merkmalen des Anspruchs 10 gelöst. Vorteilhafte Weiterbildungen der Erfindung sind Gegenstand der zugeordneten abhängigen Ansprüche. Vorteilhafte Ausführungsformen der Erfindung sind auch in der Beschreibung und in der Zeichnung beschrieben.

Gemäß der Erfindung ist im Zugriffsbereich des Roboterarms eine Wechselanordnung mit Wechselplätzen für mehrere unterschiedliche Greifwerkzeuge angeordnet. In den Wechselplätzen der Wechselanordnung sind entsprechend unterschiedliche Greifwerkzeuge angeordnet. Alle diese Greifwerkzeuge sind mittels eines über die Steuerung steuerbaren Kupplungssystems mit dem Kopplungselement am freien Ende des Roboterarms verbindbar.

Zudem weist die Steuerung einen Werkzeugspeicherbereich für die Daten der unterschiedlichen Greifwerkzeuge auf. Diese Daten enthalten z.B. geometrische Daten mit Greif- und Annäherungsinformationen der einzelnen Greifwerkzeuge. Die Steuerung hat des Weiteren eine werkzeugspezifische Recheneinheit, die ausgebildet ist, in Abhängigkeit von den Daten im Werkzeugspeicherbereich und den Daten der 3D-Scaneinrichtung den Zugriffserfolg und/oder die Zugriffsgeschwindigkeit für wenigstens zwei der unterschiedlichen Greifwerkzeuge, vorzugsweise für alle Greifwerkzeuge, zu berechnen. Die Steuerung ist ausgebildet, in Abhängigkeit von dem Rechenergebnis der Recheneinheit einen Werkzeugwechsel durchzuführen oder mit dem Greifwerkzeug zu greifen, das aktuell mit dem Kopplungselement am Ende des Roboterarms verbunden ist, je nachdem welche Alternative für einen Greifvorgang oder eine ganze Reihe von Greifvorgängen (der im Behälter oben liegenden Stückgüter) am schnellsten ist.

Die Erfindung hat den Vorteil, dass die Greifanordnung in der Lage ist, den Zugriffserfolg und/oder die Zugriffsgeschwindigkeit für das Zugreifen auf das Stückgut für unterschiedliche Greifwerkzeuge zu berücksichtigen und miteinander zu vergleichen. Die Berechnung erstreckt sich nicht nur das Greifwerkzeug, das aktuell mit dem Roboterarm verbunden ist, sondern auch auf alle in der Wechselanordnung angeordneten Greifwerkzeuge. Auf diese Weise werden eine Vielzahl von erweiterten Möglichkeiten eröffnet, das Greifwerkzeug zu greifen. Wenn ein Zugriffserfolg beispielsweise durch mehrere Greifwerkzeuge möglich ist, kann die Steuerung das Greifwerkzeug verwenden, welches - unter Berücksichtigung der Dauer des Werkzeugwechsels - den schnellsten Zugriffserfolg bietet. Diese Berechnung kann auch mehrere Greifvorgänge, z.B. aller oben liegenden Stückgüter, berücksichtigen, die in dem Behälter oben auf liegend und von der 3D-Scanvorrichtung erfasst worden sind.

Wie oben ausgeführt, ist die Steuerung in der Lage, nicht nur einen einzigen Greifvorgang vorauszuberechnen, sondern aufgrund des 3D-Scanergebnisses der 3D-Scaneinrichtung mehrere Greifvorgänge, so dass die Auswahl eines weiteren Agierens mit dem aktuellen Greifwerkzeug oder ein Werkzeugwechsel auf der Vorausberechnung mehrerer Greifvorgänge basieren kann. So kann zum Beispiel die Recheneinheit feststellen, dass ein anderes Greifwerkzeug prinzipiell einfacher in der Lage ist, die einzelnen Teile des Stückguts zu greifen, in welchem Fall dann das Greifwerkzeug gewechselt wird auf eben das Greifwerkzeug, das für das entsprechende Stückgut besser geeignet ist. Derartige Greifwerkzeuge können Spreizgreifer, Greifzangen, Unterdruckgreifer, Magnetgreifer oder beliebige Hybride davon sein.

Die Erfindung ermöglicht damit die schnelle und sichere Einzelentnahme von losem Stückgut.

Vorzugsweise verfügt das Kupplungssystem über wenigstens einen Druckluftanschluss, Unterdruckanschluss und/oder wenigstens einen elektrischen Anschluss, um die z.B. oben genannten unterschiedlichen Greifwerkzeuge betätigen zu können.

In einer vorteilhaften Weiterbildung der Erfindung hat das Kupplungssystem an dem Kopplungssystem einen konischen Zentrierdorn und werkzeugseitig eine konische Aufnahme oder Ringaufnahme für den Zentrierdorn. Ein derartiges Kupplungssystem arbeitet sehr sicher und sehr schnell und ermöglicht somit einen schnellen und zuverlässigen Werkzeugwechsel. Zudem ist ein konischer Zentrierdorn selbstzentrierend, so dass eine Greifanordnung mit einem nicht so exakt arbeitenden Roboter verwendet werden kann.

Vorzugsweise enthält das Kupplungssystem, insbesondere das Kopplungselement, eine elektrische elektromagnetische oder pneumatisch betriebene Rasteinrichtung zur Festlegung des Greifwerkzeuges an dem Kopplungselement. Auf diese Weise kann das Greifwerkzeug schnell und sicher an dem Kopplungselement festgelegt werden, so dass es sich im laufenden Betrieb nicht ablöst.

In einer vorteilhaften Weiterbildung der Erfindung hat die Steuerung einen Speicher, in welchem die Position der Wechselplätze als auch eine Kennung jedes in einem Wechselplatz befindlichen Greifwerkzeuges gespeichert ist. Die Steuerung weiß auf diese Weise sofort, welches Greifwerkzeug in welchem Wechselplatz vorhanden ist und kann den entsprechenden Wechselplatz aufgrund der vorgespeicherten Position sofort anfahren.

Vorzugsweise weist jedes Greifwerkzeug einen Träger mit einer individuellen Kennung auf, und die Steuerung ist ausgebildet, die Kennung von dem Träger zu lesen. Wie oben bereits ausgeführt, kennt die Steuerung vorzugsweise die Art des Greifwerkzeuges und die Position in den Wechselplätzen. Sollte aufgrund einer manuellen Fehlbedienung jedoch einmal ein falsches Greifwerkzeug in einen nicht zugehörigen Wechselplatz gesteckt worden sein, kann die Steuerung den Träger des Greifwerkzeuges lesen, welcher Träger beispielsweise ein mechanisches Element im Bereich des Kupplungssystems und/oder ein Datenträger, zum Beispiel in der Art eines Transponders, sein kann. Auf diese Weise ist ausgeschlossen, dass aufgrund einer mechanischen Fehlbedienung das falsche Greifwerkzeug mit dem Roboterarm verbunden wird.

Vorzugsweise ist der Roboter bzw. Roboterarm um eine vertikale Drehachse schwenkbar angeordnet und die Wechselplätze sind insbesondere äquidistant auf einem Kreis um die Drehachse des Roboters/Roboterarms angeordnet. Auf diese Weise kann der Roboterarm alle Wechselplätze lediglich aufgrund einer Schwenkbewegung der Hauptdrehachse erreichen, was einen sehr schnellen zeitgleichen Zugriff auf alle Wechselplätze ermöglicht.

Die Erfindung betrifft ebenfalls ein Verfahren zum Entnehmen von zufällig gelagertem losen Stückgut aus einem Container unter Verwendung eines Roboters mit wenigstens einem mit mehreren Freiheitsgraden beweglichen Roboterarm, welcher ein Kopplungselement für ein Greifwerkzeug trägt. Wenigstens ein im Zugriffsbereich des Roboterarms angeordneter Behälter mit insbesondere undefiniert angeordnetem Stückgut wird dabei durch eine 3D-Scaneinrichtung abgescannt, die mit einer Steuerung des Roboters verbunden ist.

Erfindungsgemäß ist im Zugriffsbereich des Roboterarms eine Wechselanordnung mit Wechselplätzen angeordnet, in welchen unterschiedliche Greifwerkzeuge angeordnet sind. Alle in den Wechselplätzen angeordneten Greifwerkzeuge sind alternativ über ein Kupplungssystem mit dem Kopplungselement des Roboterarms verbindbar. In einem Werkzeugspeicherbereich der Steuerung sind Daten der in den Wechselplätzen und des am Roboterarm vorhandenen Greifwerkzeuges abgelegt. In Abhängigkeit von den Daten im Werkzeugspeicherbereich und den Daten der 3D-Scaneinrichtung wird somit für wenigstens zwei, insbesondere alle, der in den Wechselplätzen angeordneten Greifwerkzeuge der Zugriffserfolg und die Zugriffsgeschwindigkeit für wenigstens ein Stück des Stückguts berechnet und in Abhängigkeit von dem Rechenergebnis der Recheneinheit wird entweder mit dem aktuell an dem Roboterarm angeordneten Greifwerkzeug das Stückgut gegriffen, oder es wird ein Werkzeugwechsel durchgeführt und das Stückgut wird mit dem ausgewechselten Greifwerkzeug gegriffen. Hinsichtlich der Merkmale und Vorteile des erfindungsgemäßen Verfahrens wird oben auf die Beschreibung der erfindungsgemäßen Greifanordnung verwiesen.

Wie bereits ausgeführt, kann die Berechnung des Zugriffserfolgs beziehungsweise der Zugriffszeit auf der Berechnung des Zugriffs auf ein Stücks des Stückguts basieren, welches beispielsweise am positivsten für den Zugriff durch das Greifwerkzeug liegt. Um jedoch eine umfassendere und aussagekräftigere Berechnung zu ermöglichen, die die Gesamttauglichkeit der verschiedenen Greifwerkzeuge für das entsprechende Stückgut berücksichtigt, kann die Berechnung des Zugriffserfolges beziehungsweise der Zugriffszeit auf der Basis mehrerer Zugriffsvorgänge erfolgen. Zum Beispiel können bei dem 3D-Scan des im Behälter befindlichen Stückguts erkannt werden, dass beispielsweise 12 Stück derart obenauf liegen, dass sie von wenigstens einem der Greifwerkzeuge gegriffen werden können. Wenn sich dabei herausstellt, dass lediglich ein oder zwei Stück dieser Stückgüter durch das aktuelle Greifwerkzeug gegriffen werden können, jedoch deutlich mehr Stückgüter von einem anderen Greifwerkzeug, so kann das Greifwerkzeug gewechselt werden, um auf diese Weise die Gesamtentleerungszeit für das Entleeren des Behälters zu optimieren.

Vorzugsweise erfolgt die Berechnung des Zugriffserfolgs beziehungsweise der Zugriffsgeschwindigkeit für mehrere Greifwerkzeuge zumindest überlappend insbesondere gleichzeitig, was die Gesamtzugriffszeit und damit die Gesamtzeit zum Entleeren des Behälters deutlich reduziert.

Besonders vorteilhaft ist dies möglich auf einem Mikroprozessor mit mehreren Prozessorkernen, in welchem Fall dann auf jedem Prozessorkern der Zugriffserfolg beziehungsweise die Zugriffsgeschwindigkeit eines der Greifwerkzeuge berechnet wird. Die Gesamtperformance der Greifanordnung wird somit durch die Mehrzahl an Greifwerkzeugen nicht beeinträchtigt, zumal die Rechenleistung der Mikroprozessoren heute keinen begrenzenden Faktor hierfür mehr darstellt.

Es ist für den Fachmann offensichtlich, dass die oben beschriebenen Ausführungsformen der Erfindung in beliebiger Weise miteinander kombiniert werden können.

Die Erfindung wird nachfolgend anhand der schematischen Zeichnung beschrieben. In dieser zeigen:
- Fig. 1: eine schematische Seitenansicht einer erfindungsgemäßen Greifanordnung,
- Fig. 2: perspektivische Darstellung des Endes eines Roboterarm mit einem Kopplungselement und eines damit zu verbindenden Greifwerkzeugs,
- Fig. 3: perspektivische Darstellung des Endes eines Roboterarm mit einem Kopplungselement und eines damit verbundenen Greifwerkzeugs,
- Fig. 4 und 5: seitliche Darstellungen entsprechend den Fig. 2 und 3,
- Fig. 6: perspektivische Darstellung des Endes eines Roboterarm mit einem Kopplungselement und eines damit zu verbindenden anderen Greifwerkzeugs, und
- Fig. 7: perspektivische Darstellung des Endes eines Roboterarm mit einem Kopplungselement und eines damit zu verbindenden weiteren Greifwerkzeugs.

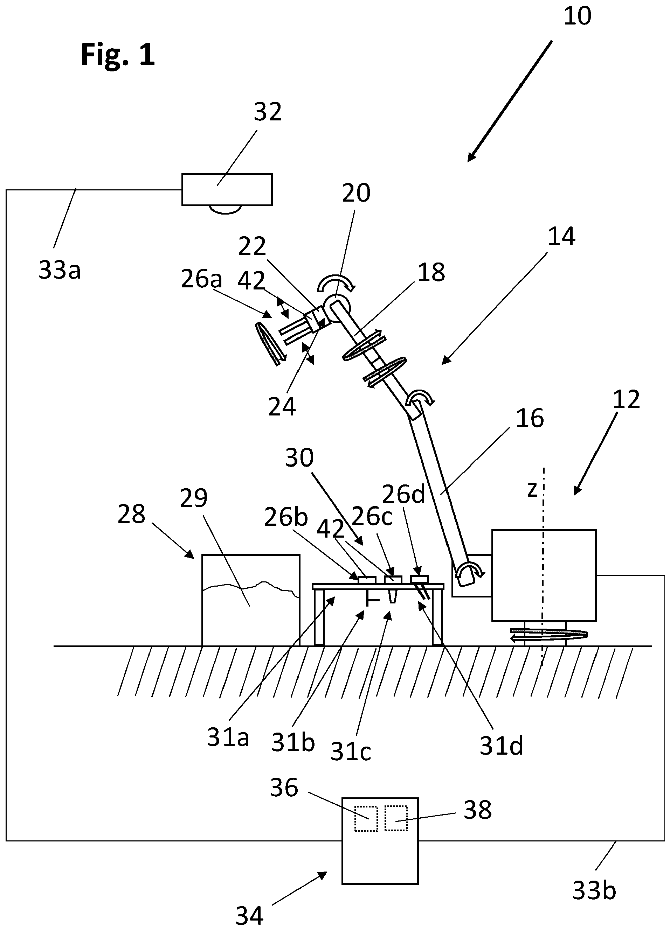

Fig. 1 zeigt eine Greifanordnung 10 umfassend einen um eine zentrale Achse Z schwenkbaren Roboter 12, mit einem Basiskörper 13, an welchem ein Roboterarm 14 bestehend aus einem unteren Armabschnitt 16 angelenkt ist, der über ein Drehgelenk mit einem oberen Armabschnitt 18 verbunden ist. An dem freien Ende des oberen Roboterarmabschnitts 18 ist insbesondere über ein Drehgelenk 20 drehbar und über ein achsnormal dazu angeordnetes Rotationsgelenk 22 rotierbar ein Kopplungselement 24 gehalten, welches mit Verbindungsflansch 42, insbesondere einer Ring- oder Konusaufnahme eines Greifwerkzeugs 26a verbindbar ist. Im Zugriffsbereich des an dem Roboterarm 14 gehaltenen Greifwerkzeugs 26a ist ein Behälter 28 angeordnet, in welchem loses Stückgut 29 angeordnet ist, welches durch das Greifwerkzeug 26a einzeln entnommen werden soll. Im Zugriffsbereich des Roboterarms 14 ist des Weiteren eine bankförmige Wechselanordnung 30 mit vier Wechselplätzen 31a-31d angeordnet. Auf diesen sind unterschiedliche Greifwerkzeuge 26a-26d angeordnet, beziehungsweise nur drei 26b-26d, wenn ein Greifwerkzeug 26a gerade mit dem Roboterarm 14 verbunden ist.

Alle Greifwerkzeuge 26a-26d sind in einem Schnellwechselvorgang mittels eines Kupplungssystems 25 verbindbar, welches seitens des Roboterarms 14 das Kopplungselement 24 umfasst und werkzeugseitig einen dazu komplementären Verbindungsflansch 42.

Über dem Behälter 28 ist eine 3D-Scaneinrichtung 32 angeordnet, welche über eine Signal/Steuerleitung 33a mit einer Steuerung 34 der Greifanordnung verbunden ist, welche Steuerung 34 auch den Roboter 12 über eine zweite Signal/Steuerleitung 33b ansteuert. Die Steuerung 34 enthält einen Werkzeugspeicherbereich 36, in welchem Daten, insbesondere geometrische bzw. greiftechnische Daten der unterschiedlichen Greifwerkzeuge 26a-26d abgelegt sind. Zudem hat die Steuerung 34 eine Recheneinheit 38, die ausgebildet ist, in Abhängigkeit von den Daten im Werkzeugspeicherbereich 36 den Zugriffserfolg und/oder die Zugriffsgeschwindigkeit für jedes der unterschiedlichen Greifwerkzeuge 26a-26d zu berechnen.

Nach dem Scannen des in dem Behälter 28 liegenden Stückguts 29 ist somit die Steuerung in der Lage, den Zugriffserfolg für den Zugriff auf eine oder mehrere Stückgüter des Stückguts 29 basierend auf den unterschiedlichen Greifwerkzeugen zu berechnen und dann das Greifwerkzeug zu verwenden, welches unter Berücksichtigung der Zugriffszeiten und eventuellen Werkzeugwechselzeit den schnellsten Zugriff auf eines oder mehrere der Stückgüter ermöglicht. Wenn die Berechnung auf der Basis mehrerer Stückgüter, zum Beispiel auf der Basis aller, von oben erreichbarer Stückgüter erfolgt, ist die Berechnung in der Lage, die Eignung der unterschiedlichen Greifwerkzeuge für den Zugriff auf das Stückgut insgesamt zu berücksichtigen. Denn wenn ein Greifwerkzeug, zum Beispiel das aktuelle Greifwerkzeug 26a, auch in der Lage ist, das am besten zugängliche Stück des Stückguts am schnellsten zu greifen, kann es jedoch so sein, dass dieses Greifwerkzeug alle anderen Stücke des Stückguts deutlich schlechter greift. Die Berechnung kann daher aufgrund der Berücksichtigung vieler Zugriffsvorgänge erfolgen, was die Tauglichkeit der Greifwerkzeuge 26a-26d für den Zugriff auf die Stückgüter insgesamt wesentlich besser berücksichtigt.

In Fig. 1 zeigt das Greifwerkzeug 26a ein Zangengreifwerkzeug mit zwei dünnen parallelen Greifbacken, die ein Stückgut zwischen sich einklemmen oder von innen nach außen auseinanderspreizen können.

Das Greifwerkzeug 26b ist ein Zangengreifwerkzeug mit zwei quer zur Kopplungsachse ausgerichteten Greifbacken.

Das Greifwerkzeug 26c ist ein Unterdruckansaugwerkzeug und das Greifwerkzeug 26d ist ein Zangengreifwerkzeug, bei welchem die Backen relativ zur Kopplungsachse geneigt sind. Diese unterschiedlichen Greifwerkzeuge haben für ein definiertes Stückgut unterschiedliche Zugriffseignung, was aufgrund der erfindungsgemäßen Greifanordnung auf einfache Weise berücksichtigt werden kann.

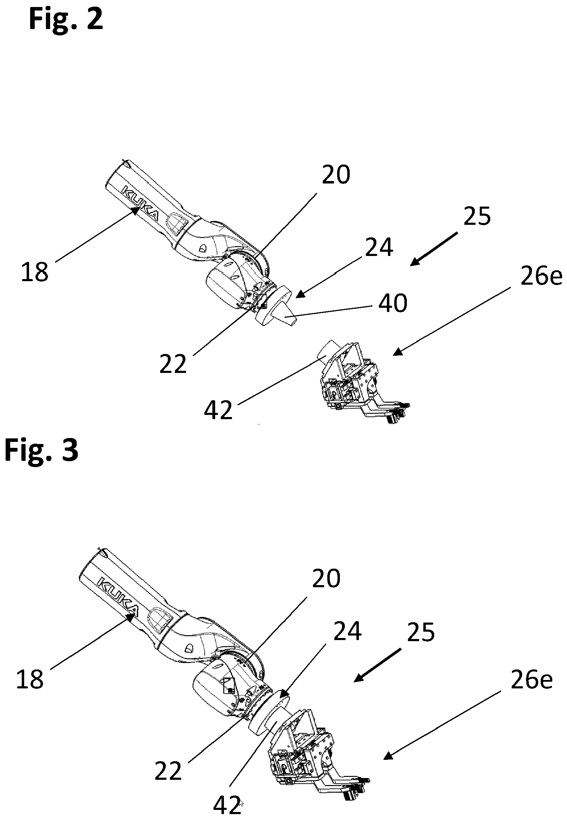

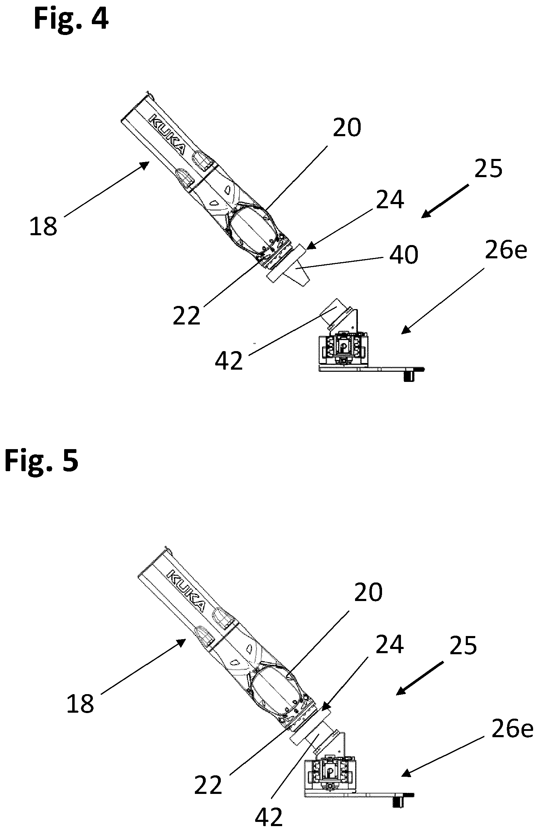

Fig. 2 und 3 zeigen das Ende des oberen Roboterarmabschnitts 18 mit dem Drehgelenk 20 und dem Rotationsgelenk 22 und mit dem Kopplungselement 24, welches hier einen Kopplungskonus 40 aufweist. Der Verbindungsflansch 42 des Greifwerkzeugs ist daher als komplementäre Konusaufnahme ausgebildet. Die Verriegelung erfolgt mechanisch per Unterdruck oder mit einer elektromechanischen betätigten Rastverbindung. Die Ansteuerung des Greifwerkzeuges 26e erfolgt elektrisch und/oder über Druckluft. Die Fig. 4 und 5 zeigen die Seitenansicht zu den Fig. 2 und 3.

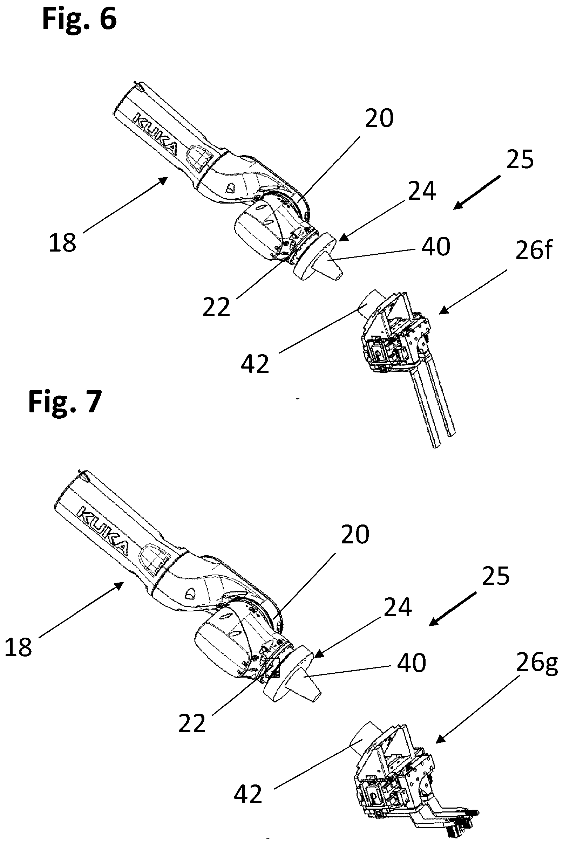

Die Fig. 6 und 7 zeigen eine Ansicht ähnlich Fig. 2 mit zwei weiteren Greifwerkzeugen 26f und 26g.

Es ist für den Fachmann offensichtlich, dass das oben beschriebene Ausführungsbeispiel nicht als die Erfindung begrenzend verstanden werden soll, sondern dass die Erfindung innerhalb des Schutzbereichs der beigefügten Patentansprüche variieren kann.

### Bezugszeichenliste:

- 10: Greifanordnung
- 12: Roboter
- 13: Basiskörper des Roboters
- 14: Roboterarm
- 16: unterer Armabschnitt des Roboterarms
- 18: oberer Armabschnitt des Roboterarms
- 20: Drehgelenk am Ende des oberen Armabschnitts
- 22: Mit dem Drehgelenk verbundenes Rotationsgelenk mit Rotationsachse quer zum Drehgelenk
- 24: Mit dem Rotationsgelenk verbundenes Kopplungselement
- 25: Kupplungssystem umfassend Kopplungselement und Verbindungsflansch
- 26a bis g: unterschiedliche Greifwerkzeuge
- 28: Behälter für Stückgut
- 29: lose in den Behälter geschüttetes Stückgut
- 30: Wechselanordnung - Wechselbank
- 31a-d: Wechselplätze für die Greifwerkzeuge
- 32: 3D-Scaneinrichtung
- 33a,b: Signal/Steuerleitungen
- 34: Steuerung der Greifanordnung
- 36: Werkzeugspeicherbereich der Steuerung
- 38: Recheneinheit
- 40: Kopplungskonus des Kopplungselements
- 42: Verbindungsflansch - Ring- oder Konusaufnahme

## Patentansprüche

1. Greifanordnung (10) für in einem Behälter (28) abgelegtes loses Stückgut (29), umfassend einen Roboter (12) mit wenigstens einem mit mehreren Freiheitsgraden beweglichen Roboterarm (14), dessen Zugriffsbereich zur Aufnahme des Behälters (28) ausgebildet ist,
eine Steuerung (34) für den Roboterarm (14),
wenigstens ein an dem Roboterarm (14) angeordnetes Kopplungselement (24) für Greifwerkzeuge (26a-26g),
eine mit der Steuerung (34) verbundene 3D-Scaneinrichtung, die ausgebildet ist, das im Behälter (28) befindliche Stückgut (29) abzuscannen,
eine im Zugriffsbereich des Roboterarms (14) angeordnete Wechselanordnung (30) mit Wechselplätzen (31a-31d) für mehrere unterschiedliche Greifwerkzeuge (26a-26g),
alle Greifwerkzeuge (26a-26g) sind mit dem Roboterarm (14) mittels eines über die Steuerung (34) steuerbaren Kupplungssystems (25) verbindbar, welches seitens des Roboterarms (14) das Kopplungselement (24) umfasst,
die Steuerung (34) weist einen Werkzeugspeicherbereich (36) für Daten der unterschiedlichen Greifwerkzeuge (26a-26g) auf,
die Steuerung (34) hat eine werkzeugspezifische Recheneinheit (38), die ausgebildet ist, in Abhängigkeit von den Daten im Werkzeugspeicherbereich (36) und den Daten der 3D-Scaneinrichtung den Zugriffserfolg und/oder die Zugriffsgeschwindigkeit für wenigstens zwei der unterschiedlichen Greifwerkzeuge (26a-26g) zu berechnen, und die Steuerung (34) ist ausgebildet, in Abhängigkeit von dem Rechenergebnis der Recheneinheit (38) einen Werkzeugwechsel durchzuführen oder mit dem Greifwerkzeug (26a-26g) zu greifen, das aktuell mit dem Kopplungselement (24) verbunden ist.

2. Greifanordnung (10) nach Anspruch 1, **dadurch gekennzeichnet, dass** das Kupplungssystem (25) über wenigstens einen Druckluftanschluss und/oder wenigstens einen elektrischen Anschluss verfügt.

3. Greifanordnung (10) nach Anspruch 1 oder 2, **dadurch gekennzeichnet, dass** das Kupplungssystem (25) an dem Kopplungselement (24) einen konischen Zentrierdorn (40) und werkzeugseitig eine konische Aufnahme (42) oder Ringaufnahme zur Aufnahme des Zentrierdorns (40) aufweist.

4. Greifanordnung (10) nach einem der vorherigen Ansprüche, **dadurch gekennzeichnet, dass** das Kupplungssystem (25) eine insbesondere an dem Kopplungselement (24) angeordnete elektrische, elektromagnetische oder pneumatisch betriebene Rasteinrichtung zur Festlegung des Greifwerkzeugs (26a-26g) an dem Kopplungselement (24) aufweist.

5. Greifanordnung (10) nach einem der vorherigen Ansprüche, **dadurch gekennzeichnet, dass** die Steuerung (34) einen Speicher aufweist, in welchem die Position der Wechselplätze (31a-31d) als auch eine Kennung jedes in einem Wechselplatz (31a-31d) befindlichen Greifwerkzeugs (26a-26g) gespeichert ist.

6. Greifanordnung (10) nach einem der vorherigen Ansprüche, **dadurch gekennzeichnet, dass** jede Greifwerkzeug (26a-26g) einen Träger mit einer individuellen Kennung aufweist, und dass die Steuerung (34) ausgebildet ist, die Kennung von dem Träger zu lesen.

7. Greifanordnung (10) nach Anspruch 6, **dadurch gekennzeichnet, dass** der Träger wenigstens ein mechanisches Element im Bereich des Kupplungssystems (25) aufweist.

8. Greifanordnung (10) nach Anspruch 6 oder 7, **dadurch gekennzeichnet, dass** der Träger ein Datenträger ist.

9. Greifanordnung (10) nach einem der vorherigen Ansprüche, **dadurch gekennzeichnet, dass** der Roboterarm (14) um eine vertikale Drehachse (z) schwenkbar angeordnet ist, und dass die Wechselplätze (31a-31d) insbesondere äquidistant auf einem Kreis um die Drehachse des Roboterarms (14) angeordnet sind.

10. Verfahren zum Entnehmen von zufällig gelagertem losen Stückgut (29) aus einem Behälter (28), unter Verwendung eines Roboters (14) mit wenigstens einem mit mehreren Freiheitsgraden beweglichen Roboterarm (14), welcher ein Kopplungselement (24) für ein Greifwerkzeug (26a-26g) trägt,
wobei wenigstens ein im Zugriffsbereich des Roboterarms (14) angeordneter Behälter (28) durch eine
3D-Scaneinrichtung (32) abgescannt wird, die mit einer Steuerung (34) des Roboters verbunden ist,
wobei im Zugriffsbereich des Roboterarms (14) eine Wechselanordnung (30) mit Wechselplätzen (31a-31d) angeordnet ist, in welchen Wechselplätzen (31a-31d) unterschiedliche Greifwerkzeuge (26a-26g) angeordnet sind,
wobei alle in den Wechselplätzen (31a-31d) angeordneten Greifwerkzeuge (26a-26g) über ein Kupplungssystem (25) alternativ mit dem Roboterarm (14) verbindbar sind, Daten der in den Wechselplätzen (31a-31d) angeordneten Greifwerkzeuge (26a-26g) sind in einem Werkzeugspeicherbereich (36) der Steuerung (34) abgelegt,
in Abhängigkeit von den Daten im Werkzeugspeicherbereich (36) und den Daten der 3D-Scaneinrichtung wird in der Steuerung (34) der Zugriffserfolg und/oder die Zugriffsgeschwindigkeit für wenigstens zwei der in den Wechselplätzen (31a-31d) angeordneten Greifwerkzeuge (26a-26g) berechnet, und
in Abhängigkeit von dem Rechenergebnis wird entweder mit dem aktuell mit dem Kopplungselement (24) verbundenen Greifwerkzeug (26a-26g) das Stückgut (29) gegriffen oder es wird ein Werkzeugwechsel durchgeführt und das Stückgut (29) wird mit dem ausgewechselten Greifwerkzeug (26a-26g) gegriffen.

11. Verfahren nach Anspruch 10, **dadurch gekennzeichnet, dass** die Berechnung des Zugriffserfolgs/der Zugriffszeit auf der Basis mehrerer vorberechneter Greifvorgänge erfolgt.

12. Verfahren nach Anspruch 10 oder 11, **dadurch gekennzeichnet, dass** die Berechnung des Zugriffserfolgs/der Zugriffsgeschwindigkeit für mehrere Greifwerkzeuge (26a-26g) zumindest überlappend, insbesondere gleichzeitig erfolgt.

13. Verfahren nach Anspruch 12, implementiert auf einem Mikroprozessor mit mehreren Prozessorkernen, **dadurch gekennzeichnet, dass** auf jedem Prozessorkern der Zugriffserfolg/die Zugriffsgeschwindigkeit eines der Greifwerkzeuge (26a-26g) berechnet wird.
